# EUROPEAN PATENT SPECIFICATION

(11) **EP 4 089 279 B1**
(45) Date of publication and mention of the grant of the patent: **26.02.2025**
(21) Application number: 22172331.5
(22) Date of filing: 09.05.2022
(51) Int. Cl.: F03D 7/02

(54) **WIND TURBINE BRAKE CONTROL DEVICE AND WIND TURBINE**
WINDTURBINENBREMSSTEUERVORRICHTUNG UND WINDTURBINE
DISPOSITIF DE COMMANDE DE FREINAGE D'ÉOLIENNE ET ÉOLIENNE

(30) Priority: 10.05.2021 JP 2021079969
(43) Date of publication of application: 16.11.2022
(73) Proprietor: Nabtesco Corporation, Tokyo 102-0093 (JP)
(72) Inventor: Goto, Kenta, Tokyo, 102-0093 (JP)
(74) Representative: Grünecker Patent- und Rechtsanwälte PartG mbB

(56) References cited:
- EP-A1- 3 018 344
- EP-A1- 3 712 427
- EP-A1- 3 842 632
- US-A1- 2020 271 092

## Description

### Technical field

The present disclosure relates to a wind turbine brake control device and a wind turbine.

### Background

In a wind turbine for wind power generation, the yaw control for turning the rotor and the nacelle of the wind turbine in accordance with the wind direction is performed to enhance the efficiency in rotation of the blades of the wind turbine. In the yaw control, for example, a driving force (i.e., a load) is transmitted from a drive device provided in the nacelle to a ring gear provided on the upper end portion in the tower, thereby causing the drive device to turn along with the nacelle.

To retain the nacelle at the position reached after the turning by the yaw control, the wind turbine is provided with an electromagnetic brake for braking the rotation of the drive shaft of the drive device, as disclosed in, for example, JP 2013- 36 240 A.

Document EP 3 842 632 A1 relates to a wind turbine drive control device for controlling a plurality of drive devices for moving two structures included in a wind power generation device relative to each other, the wind turbine drive control device including: an obtaining unit for obtaining a plurality of information items related to loads occurring between each of the plurality of drive devices and one of the two structures that receives forces generated by the plurality of drive devices; and a control unit for controlling the plurality of drive devices in such a manner that, in a state where each of the plurality of drive devices is controlled to generate a predetermined braking force, the braking force of at least one first drive device among the plurality of drive devices is increased, based on the plurality of information items.

Document EP 3 018 344 A1 relates to a wind turbine comprising a nacelle with a generator and wind turbine blades for driving the generator, and a tower supporting the nacelle, and document EP 3 712 427 A1 relates to a wind turbine comprising an active yaw system realised to maintain an upwind orientation of the wind turbine aerodynamic rotor during safe operating conditions.

### Brief description of the drawings

Fig. 1 is a block diagram showing a wind turbine brake control device according to a first embodiment.
Fig. 2 is a perspective view showing a wind turbine according to the first embodiment.
Fig. 3 is a circuit diagram showing the wind turbine brake control device according to the first embodiment.
Fig. 4 is a flowchart showing an example of operation of the wind turbine brake control device according to the first embodiment.
Fig. 5 is a flowchart showing an example of operation of the wind turbine brake control device according to a modification of the first embodiment.
Fig. 6 is a sectional view showing a part of a tower and a nacelle in a wind turbine according to a second embodiment.
Fig. 7 is a plan view showing an arrangement of drive devices in a movable section in the wind turbine according to the second embodiment.
Fig. 8 is a partially sectional side view of a drive device in the wind turbine according to the second embodiment.
Fig. 9 is a partially sectional side view of an installation portion of a drive device in the wind turbine according to the second embodiment.
Fig. 10 is a sectional view showing an electromagnetic brake in a wind turbine brake control device according to the second embodiment.

### Detailed description

The load acting from the drive device onto the ring gear may vary abruptly due to an abrupt change in the wind direction or the wind velocity. To inhibit damage of the ring gear due to an abrupt change in the load acting on the ring gear, the electromagnetic brake needs to be released quickly.

However, in the conventional arts, an electromagnetic contactor was used to open and close the electromagnetic brake, and therefore, it was difficult to release the electromagnetic brake instantly.

The present invention addresses the above drawback, and one object thereof is to provide a wind turbine brake control device and a wind turbine capable of inhibiting the damage of the ring gear of the wind turbine due to an abrupt change in the load acting on the ring gear.

The present invention is a wind turbine brake control device comprising: an electromagnetic brake for braking at least one of relative rotation between a pinion gear installed in a first structure and a ring gear installed in a second structure or rotation of a motor having the pinion gear mounted thereto, the first structure and the second structure constituting a movable section of a wind turbine; and a contactless relay disposed on a power supply line between a power supply for operation of the electromagnetic brake and the electromagnetic brake and configured to open and close the power supply line, wherein the power supply is a three-phase power supply, and the contactless relay is a three-phase relay or a single-phase.

The present invention is a wind turbine brake control device comprising: an electromagnetic brake for braking at least one of relative rotation between a pinion gear installed in a first structure and a ring gear installed in a second structure or rotation of a motor having the pinion gear mounted thereto, the first structure and the second structure constituting a movable section of a wind turbine; and a contactless relay configured to open and close a power supply line between a power supply for operation of the electromagnetic brake and the electromagnetic brake at a response speed of 100 ms or less.

In the wind turbine brake control device according to the present invention, the first structure may be a nacelle.

The wind turbine brake control device according to the present invention may further comprise a speed reducer connected to a rotating shaft of the motor and configured to decelerate the rotation of the motor and output motive power with an increased torque to the pinion gear, and the electromagnetic brake may brake rotation of the rotating shaft of the motor to brake rotation of the pinion gear.

The wind turbine brake control device according to the present invention may further comprise: a sensor for sensing a load acting between a drive device and the ring gear, the drive device including the motor, the speed reducer, and the pinion gear; and a control unit configured to output to the contactless relay a control signal for controlling opening and closing of the power supply line in accordance with the sensed load.

In the wind turbine brake control device according to the present invention, the sensor may be a strain sensor configured to sense the load by sensing a strain of a bolt fixing the drive device to the movable section, and when the sensed load exceeds a threshold value, the control unit may output a signal as the control signal for an instruction for opening or closing the power supply line.

In the wind turbine brake control device according to the present invention, the contactless relay may include a photocoupler.

In the wind turbine brake control device according to the present invention, the contactless relay may include a MOSFET.

The wind turbine brake control device according to the present invention may further comprise a surge protection element disposed on the power supply line between the contactless relay and the electromagnetic brake.

The present invention is a wind turbine comprising: a wind turbine brake control device, wherein the wind turbine brake control device includes: an electromagnetic brake for braking at least one of relative rotation between a pinion gear installed in a first structure and a ring gear installed in a second structure or rotation of a motor having the pinion gear mounted thereto, the first structure and the second structure constituting a movable section of the wind turbine; and a contactless relay disposed on a power supply line between a power supply for operation of the electromagnetic brake and the electromagnetic brake and configured to open and close the power supply line, wherein the power supply is a three-phase power supply, and the contactless relay is a three-phase relay or a single-phase.

The present invention makes it possible to inhibit damage of the ring gear of the wind turbine due to an abrupt change in the load acting on the ring gear.

The embodiments of the present invention will now be described with reference to the appended drawings. In the drawings, for ease of illustration and understanding, a scale size, a dimensional ratio, and so on are altered or exaggerated as appropriate from actual values.

### <First Embodiment>

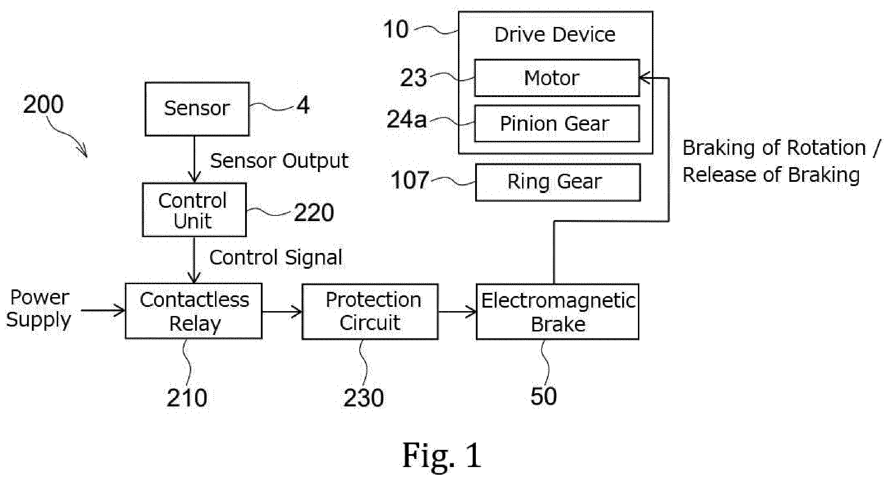

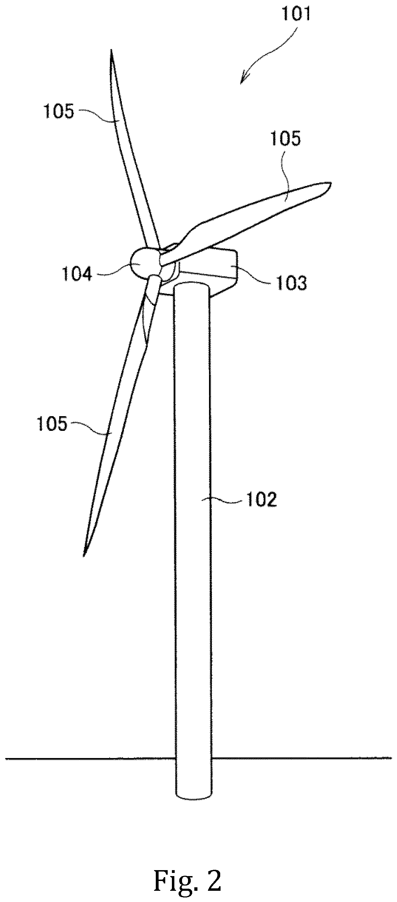

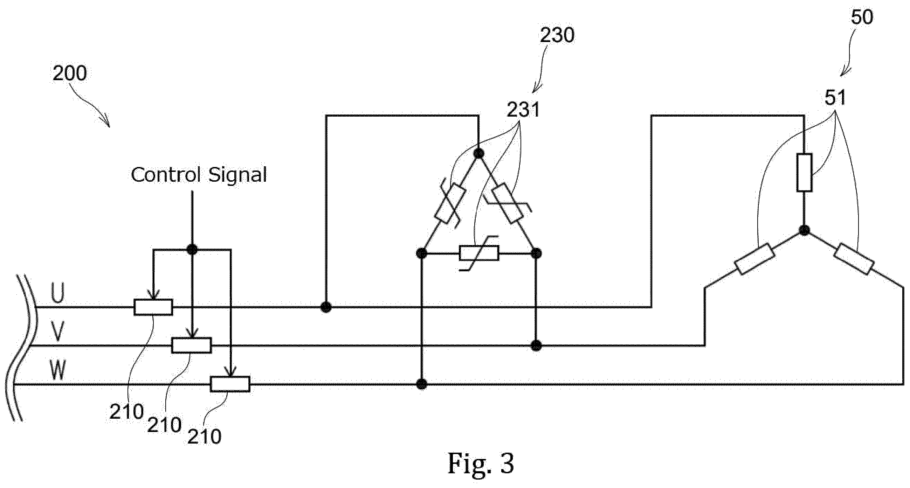

Fig. 1 is a block diagram showing a wind turbine brake control device 200 according to a first embodiment. Fig. 2 is a perspective view showing a wind turbine 101 according to the first embodiment. Fig. 3 is a circuit diagram showing the wind turbine brake control device 200 according to the first embodiment.

The wind turbine brake control device 200 controls the braking of the wind turbine 101 performed by the electromagnetic brake 50 (described later). As shown in Fig. 1, the wind turbine brake control device 200 includes an electromagnetic brake 50, a contactless relay 210, a control unit 220, and a protection circuit 230.

The electromagnetic brake 50 brakes the relative rotation between a pinion gear 24a installed in a first structure and a ring gear 107 installed in a second structure, the first structure and the second structure constituting a movable section of the wind turbine 101. Additionally or alternatively, the electromagnetic brake 50 brakes the rotation of a motor 23 having the pinion gear 24a mounted thereto. The term "braking," which should be broadly construed, embraces both retaining a stopped state of an object that has been stopped and stopping a moving object.

As shown in Fig. 2, the wind turbine 101 includes a tower 102, a nacelle 103, a rotor 104, and blades 105. The tower 102 extends upward in a vertical direction from the ground. The nacelle 103 is installed on the top of the tower 102 such that the nacelle 103 is rotatable relative to the tower 102. The nacelle 103 rotates about the longitudinal direction of the tower 102, which is yaw rotation. The nacelle 103 is driven by a drive device 10 having the motor 23. The drive device 10 of the nacelle 103 may further include a speed reducer for decelerating the rotation of the motor 23 and outputting motive power with an increased torque to the pinion gear 24a. The nacelle 103 contains devices installed therein for wind power generation, such as a power transmission shaft and an electric power generator connected to the power transmission shaft. The rotor 104 is connected to the power transmission shaft in the nacelle 103 and is rotatable relative to the nacelle 103. A plurality of blades 105 (three blades 105 in the example shown in Fig. 2) are provided. The plurality of blades 105 extend radially from the rotational axis of the rotor 104 for the rotation relative to the nacelle 103. The blades 105 are arranged at equal angular intervals around the rotational axis of the rotor 104.

Each of the blades 105 is rotatable about a longitudinal direction thereof, i.e., in the pitch direction relative to the rotor 104. A connection point between each blade 105 and the rotor 104 constitutes a movable section, so that the blade 105 and the rotor 104 are rotatable relative to each other. The blade 105 is rotationally driven by a drive device 10 having a motor 23. The drive device 10 of the blade 105 may further include a speed reducer for decelerating the rotation of the motor 23 and outputting motive power with an increased torque to the pinion gear 24a.

For example, the first structure of the wind turbine 101 is the nacelle 103, and the second structure is the tower 102. In this case, the electromagnetic brake 50 brakes the relative rotation between the pinion gear 24a installed on the nacelle 103 and the ring gear 107 installed on the tower 102 so as to mesh with the pinion gear 24a. Additionally or alternatively, the electromagnetic brake 50 brakes the rotation of the motor 23 having the pinion gear 24a mounted thereto. In the case where the first structure is the nacelle 103 and the second structure is the tower 102, control of the electromagnetic brake 50 by a contactless relay 210 (described later) can inhibit the ring gear 107 of the tower 102 from being damaged due to an abrupt change in the load acting between the drive device 10 of the nacelle 103 and the ring gear 107 of the tower 102.

It is also possible that the first structure of the wind turbine 101 is the tower 102, and the second structure is the nacelle 103. In this case, the electromagnetic brake 50 brakes the relative rotation between the pinion gear 24a installed on the tower 102 and the ring gear 107 installed on the nacelle 103 so as to mesh with the pinion gear 24a. Additionally or alternatively, the electromagnetic brake 50 brakes the rotation of the motor 23 having the pinion gear 24a mounted thereto.

It is also possible the first structure of the wind turbine 101 is the blade 105, and the second structure is the rotor 104. In this case, the electromagnetic brake 50 brakes the relative rotation between the pinion gear 24a installed in the blade 105 and the ring gear 107 installed in the rotor 104 so as to mesh with the pinion gear 24a. Additionally or alternatively, the electromagnetic brake 50 brakes the rotation of the motor 23 having the pinion gear 24a mounted thereto.

The electromagnetic brake 50 may be configured in any way as long as it can brake at least one of the relative rotation between the pinion gear 24a installed in the first structure and the ring gear 107 installed in the second structure or the rotation of the motor 23 having the pinion gear 24a mounted thereto. For example, the electromagnetic brake 50 may brake the rotation of the rotating shaft of the motor 23 to brake the rotation of the pinion gear 24a mounted to the motor 23. Besides, for example, the electromagnetic brake 50 may magnetically generate a frictional force acting between the first structure and the second structure to brake the relative rotation between the pinion gear 24a installed in the first structure and the ring gear 107 installed in the second structure.

As shown in Fig. 3, the electromagnetic brake 50 is driven by a three-phase power supply. In the example shown in Fig. 3, the electromagnetic brake 50 includes a coil 51 connected to the three-phase power supply. For example, the coil 51 is electrically powered by the three-phase power supply to generate the magnetic force for releasing the braking of the rotation of the motor 23. It is also possible that the coil 51 is electrically powered by the three-phase power supply to generate the magnetic force for braking the rotation of the motor 23. The three-phase power supply may also be used for rotationally driving the motor 23.

The contactless relay 210 is disposed on the power supply line between the power supply for operation of the electromagnetic brake 50 and the electromagnetic brake 50 and is configured to open and close the power supply line using no mechanical contact. The contactless relay 210 is also called a solid-state relay. In the example shown in Fig. 3, the contactless relay 210 is provided for each phase on the power supply line between the three-phase power supply and the electromagnetic brake 50. That is, three contactless relays 210 are provided in the example shown in Fig. 3. In the example shown in Fig. 3, the power supply has three phases, whereas the contactless relays 210 have a single phase. The contactless relays 210 open and close the respective power supply lines simultaneously in accordance with a control signal from a control unit 220 (described later). With the three single-phase contactless relays 210 for simultaneously opening and closing the power supply lines for the three phases of the three-phase power supply in accordance with the control signal, opening/closing control for the electromagnetic brake 50 can be performed quickly in response to an abrupt change in the load acting between the drive device 10 and the ring gear 107. The contactless relays 210 include, for example, a photocoupler. The photocoupler allows simple configuration of the contactless relays 210 for quickly opening and closing the power supply lines. The contactless relays 210 may include a MOSFET. The MOSFET allows simple configuration of the contactless relays 210 for quickly opening and closing the power supply lines. The three single-phase contactless relays 210 may be replaced with one three-phase contactless relay having a three-phase circuit. This can reduce the number of components.

The control unit 220 outputs to the contactless relay 210 a control signal for controlling the opening and closing of the power supply lines, thereby controlling the opening and closing of the power supply line by the contactless relay 210. When a sensor 4 for sensing the load acting between the drive device 10 and the ring gear 107 senses a load (i.e., outputs a sensor output) exceeding a threshold value, the control unit 220 outputs to the contactless relay 210 an On signal as a control signal for an instruction for closing the power supply line. In response to the On signal, the contactless relay 210 closes the power supply line. When the power supply line is closed, electric power is supplied from the power supply to the electromagnetic brake 50. Supplied with the electric power from the power supply, the electromagnetic brake 50 switches from a locking state in which the electromagnetic brake 50 brakes the rotation of the motor 23 to a freeing state in which the braking of the rotation of the motor 23 is released. The control unit 220 includes hardware such as a CPU and an electric circuit. Software may be used to realize a part of the control unit 220.

To switch the electromagnetic brake 50 to the freeing state quickly in response to an abrupt change in the load acting between the drive device 10 and the ring gear 107, the response speed of the contactless relay 210 for the On signal is preferably short. For example, the contactless relay 210 closes the power supply line at a response speed of 100 ms or less. The contactless relay 210 preferably closes the power supply line at a response speed of 10 ms or less. The contactless relay 210 more preferably closes the power supply line at a response speed of 1 ms or less.

The duration of the On signal is, for example, a short period on the millisecond order. Accordingly, the electromagnetic brake 50 releases the braking of the rotation of the motor 23 temporarily (in an instant), and then resumes the braking of the rotation of the motor 23.

It is also possible that the electromagnetic brake 50 switches from the locking state to the freeing state when the supply of electric power from the power supply is stopped. In this case, when the sensor 4 senses a load exceeding the threshold value, the control unit 220 outputs to the contactless relay 210 an Off signal as a control signal for an instruction for opening the power supply line. In response to the Off signal, the contactless relay 210 opens the power supply line. When the power supply line is opened, the supply of electric power from the power supply to the electromagnetic brake 50 is stopped. Upon the stop of supply of electric power from the power supply, the electromagnetic brake 50 switches from the locking state to the freeing state. In this case, the response speed of the contactless relay 210 for the Off signal is preferably short. For example, the contactless relay 210 opens the power supply line at a response speed of 100 ms or less. The contactless relay 210 preferably opens the power supply line at a response speed of 10 ms or less. The contactless relay 210 more preferably opens the power supply line at a response speed of 1 ms or less.

The protection circuit 230 is disposed on the power supply line between the contactless relay 210 and the electromagnetic brake 50 and is configured to protect the wind turbine brake control device 200 against the surge occurring upon the On/Off operation of the contactless relay 210. In the example shown in Fig. 3, the protection circuit 230 includes three surge protection elements 231. The surge protection elements 231 may be varistors, for example.

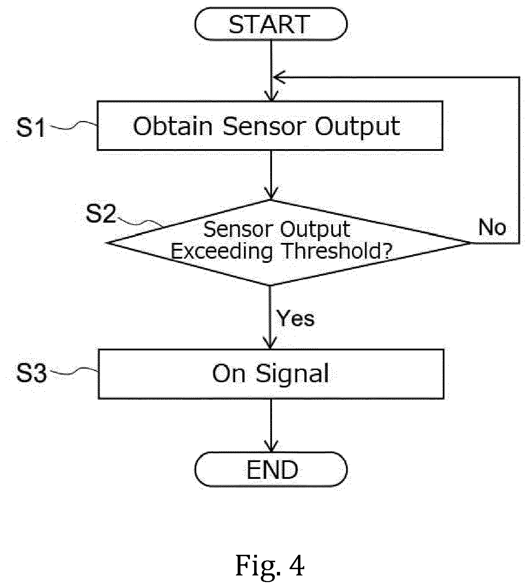

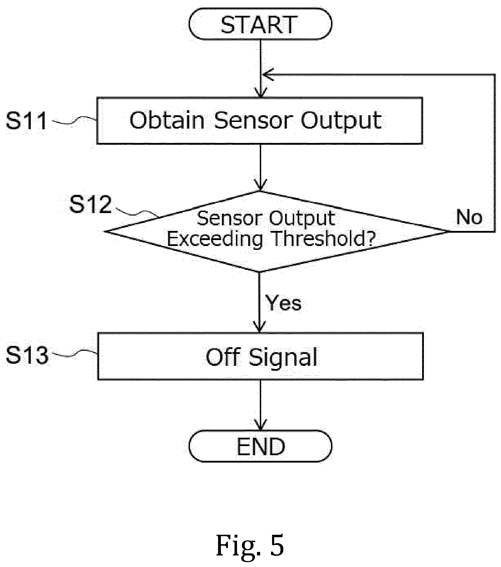

Next, examples of operation of the wind turbine brake control device 200 according to the first embodiment will now be described with reference to the flowcharts of Figs. 4 and 5. Fig. 4 is a flowchart showing an example of operation of the wind turbine brake control device 200 according to the first embodiment. Fig. 4 shows an example of operation of the wind turbine brake control device 200 for the case where the electromagnetic brake 50 is configured to switch from the locking state to the freeing state when electric power is supplied from the power supply. Fig. 5 is a flowchart showing an example of operation of the wind turbine brake control device 200 according to a modification of the first embodiment. Fig. 5 shows an example of operation of the wind turbine brake control device 200 for the case where the electromagnetic brake 50 is configured to switch from the locking state to the freeing state when the supply of electric power from the power supply is stopped.

In the example shown in Fig. 4, the control unit 220 first obtains from the sensor 4 the sensor output indicating a sensing result of the load acting between the drive device 10 and the ring gear 107 (step S1).

After obtaining the sensor output, the control unit 220 determines whether the sensor output exceeds a threshold value (step S2).

When the sensor output exceeds the threshold value (Yes in step S2), the control unit 220 outputs the On signal to the contactless relay 210 for closing the power supply line between the power supply and the electromagnetic brake 50 (step S3). The electromagnetic brake 50 is thus supplied with the electric power from the power supply, and the electromagnetic brake 50 switches from the locking state to the freeing state.

On the other hand, when the sensor output does not exceed the threshold value (No in step S2), the control unit 220 obtains the sensor output again (step S1).

In the example shown in Fig. 5, the control unit 220 first obtains from the sensor 4 the sensor output indicating a sensing result of the load acting between the drive device 10 and the ring gear 107 (step S11).

After obtaining the sensor output, the control unit 220 determines whether the sensor output exceeds a threshold value (step S12).

When the sensor output exceeds the threshold value (Yes in step S12), the control unit 220 outputs the Off signal to the contactless relay 210 for opening the power supply line between the power supply and the electromagnetic brake 50 (step S13). The supply of electric power from the power supply to the electromagnetic brake 50 is thus stopped, and the electromagnetic brake 50 switches from the locking state to the freeing state.

On the other hand, when the sensor output does not exceed the threshold value (No in step S12), the control unit 220 obtains the sensor output again (step S11).

As described above, in the first embodiment, when an excessive load occurs due to an abrupt change in the load acting between the drive device 10 and the ring gear 107, the sensor output exceeds the threshold value, and responsively the contactless relay 210 quickly closes or opens the power supply line between the power supply and the electromagnetic brake 50. Since the power supply line is quickly closed or opened, it is possible to quickly release at least one of the braking of the relative rotation between the pinion gear 24a and the ring gear 107 or the braking of the rotation of the motor 23. This configuration inhibits the damage of the ring gear 107 due to the load.

### <Second Embodiment>

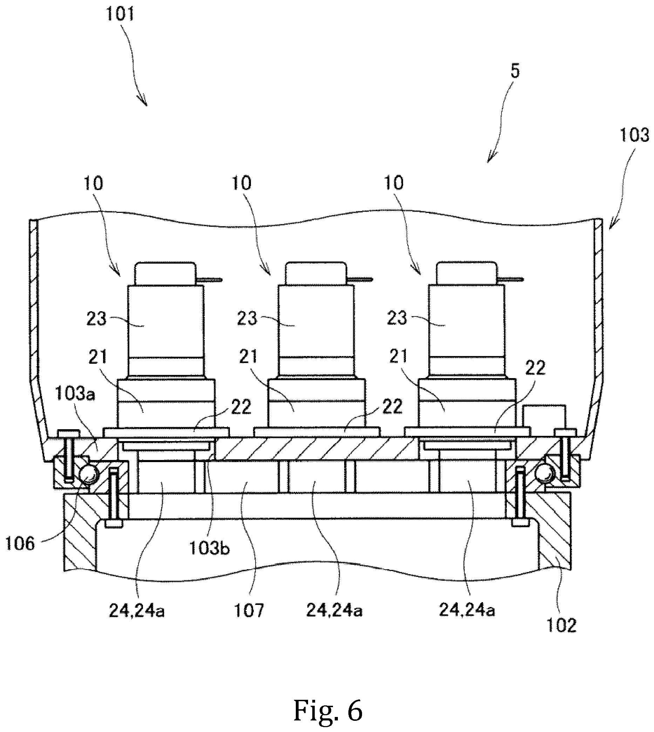

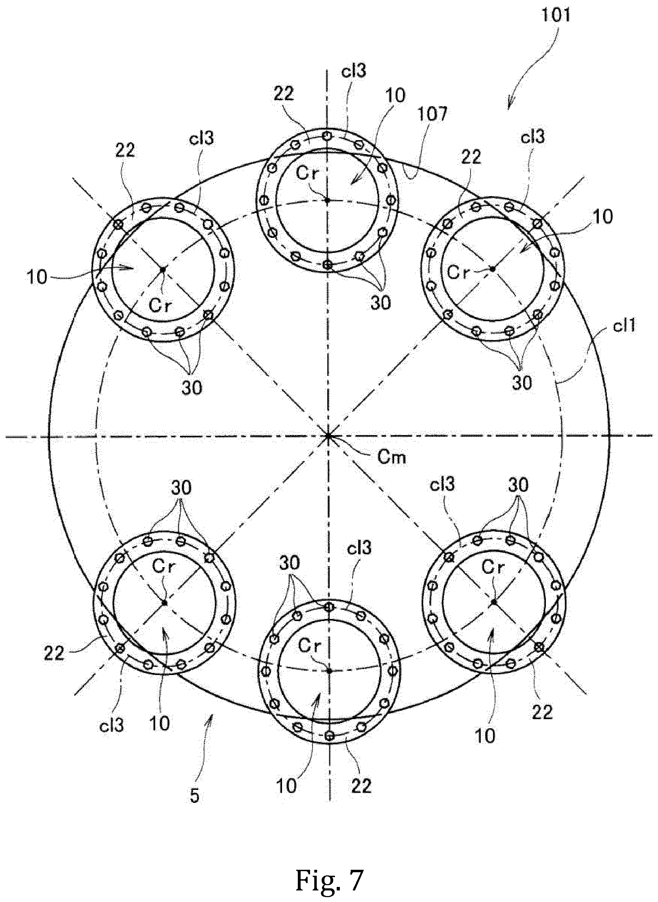

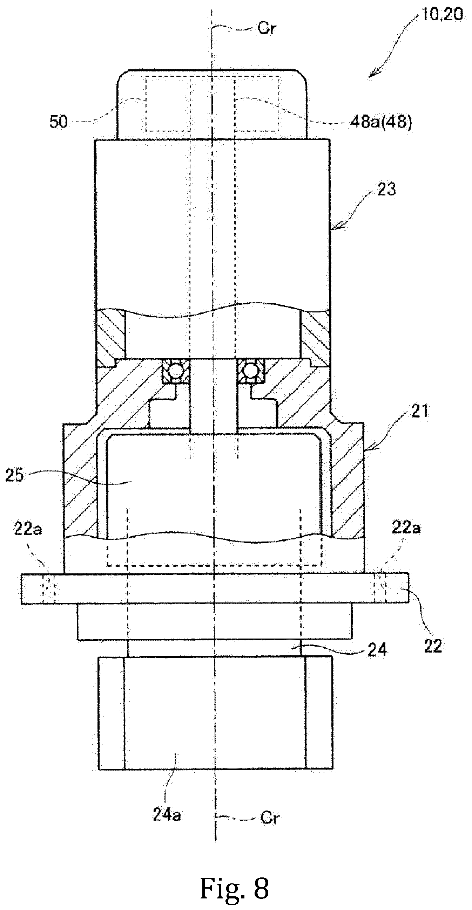

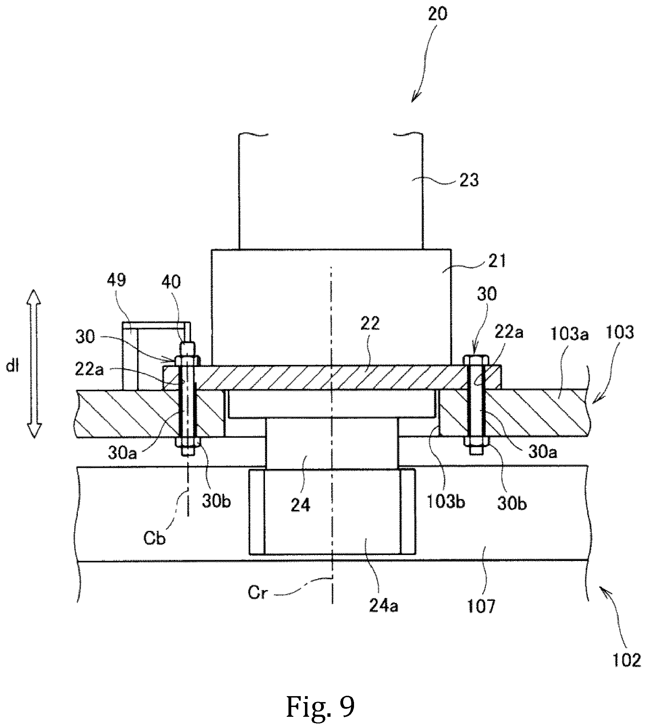

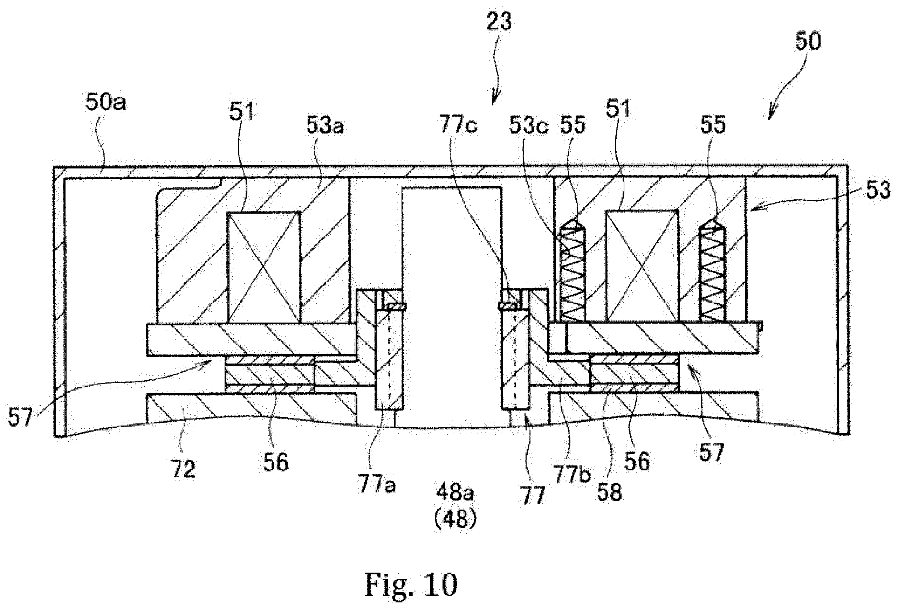

Next, the second embodiment of the invention will now be described with a more specific example of application. Fig. 6 is a sectional view showing a part of the tower 102 and the nacelle 103 in the wind turbine 101 according to the second embodiment. Fig. 7 is a plan view showing an arrangement of drive devices 10 in the movable section in the wind turbine 101 according to the second embodiment. Fig. 8 is a partially sectional side view of the drive device 10 in the wind turbine 101 according to the second embodiment. Fig. 9 is a partially sectional side view of an installation portion of the drive device 10 in the wind turbine 101 according to the second embodiment. Fig. 10 is a sectional view showing the electromagnetic brake 50 in the wind turbine brake control device 200 according to the second embodiment.

The drive device 10 is capable of driving the nacelle 103 installed so as to be rotatable relative to the tower 102 of the wind turbine 101. Alternatively, the drive device 10 is capable of driving the blade 105 installed so as to be swingable in a pitch direction relative to the rotor 104 mounted to the nacelle 103. That is, the drive device 10 can be used as a yaw drive device for carrying out yaw driving so as to cause the nacelle 103 to rotate relative to the tower 102 and also as a pitch drive device for carrying out pitch driving so as to cause a shaft portion of the blade 105 to rotate relative to the rotor 104. While the following describes an example in which the drive device 10 is used as a yaw drive device, the present invention is also applicable to a case where the drive device 10 is used as a pitch drive device.

As shown in Fig. 6, the nacelle 103 is installed on the top portion of the tower 102 so as to be rotatable relative thereto via a bearing 106 disposed on a bottom portion 103a of the nacelle 103. A ring gear 107 having internal teeth formed on an inner periphery thereof is fixed to the top portion of the tower 102. The ring gear 107 may have external teeth provided on an outer periphery thereof, instead of the internal teeth provided on the inner periphery thereof. In the drawings, the teeth of the ring gear 107 are not shown.

As shown in Fig. 7, the ring gear 107 is formed in a circumferential shape and has a center axis Cm. The nacelle 103 rotates about the center axis Cm of the ring gear 107. In the example shown, the center axis Cm of the ring gear 107 corresponds to the longitudinal direction of the tower 102. In the following description, the direction parallel to the center axis Cm of the ring gear 107 is simply referred to also as "the axial direction dl."

In the wind turbine 101 shown, as shown in Fig. 7, there are provided a pair of wind turbine drive systems 5 arranged in rotational symmetry about the center axis Cm of the ring gear 107. Each of the wind turbine drive systems 5 includes three drive devices 10. Six drive device bodies 20 in total included in the pair of wind turbine drive systems 5 are arranged along a circumference cl1 (see Fig. 7) around the center axis Cm of the ring gear 107. The three drive devices 10 included in each of the wind turbine drive systems 5 are arranged at regular intervals along the circumference cl1.

As shown in Figs. 6 and 7, of the nacelle 103 (the first structure) and the tower 102 (the second structure) configured to rotate relative to each other, the drive devices 10 are provided in the nacelle 103.

As shown in Figs. 8 and 9, the drive devices 10 each have the drive device body 20 fixed to the nacelle 103 and a strain sensor 40 for sensing the strain of a bolt 30a that fixes the drive device body 20 to the nacelle 103.

The drive device body 20 includes the motor 23, a speed reducer 25, and the pinion gear 24a. The motor 23 includes: a motor drive unit 48 for outputting motive power (i.e., a rotational force) from a drive shaft 48a (i.e., the rotating shaft) on the electric power supplied from the power supply; and the electromagnetic brake 50 for braking the rotation of the drive shaft 48a. The speed reducer 25 is connected to the drive shaft 48a of the motor 23 and an output shaft 24. The speed reducer 25 decelerates the rotation of the motor 23 input from the drive shaft 48a and outputs a motive power with an increased torque to the output shaft 24. The pinion gear 24a is provided on the output shaft 24 connected to the speed reducer 25. The pinion gear 24a meshes with the teeth of the ring gear 107 provided on the tower 102. The pinion gear 24a transmits to the ring gear 107 the motive power having a torque increased by the speed reducer 25 and thereby moves while rotating along the inner peripheral direction of the ring gear 107. Thus, the drive device body 20 including the pinion gear 24a moves along the inner peripheral direction of the ring gear 107, and the nacelle 103 having the drive device body 20 fixed thereto turns about the center axis Cm of the ring gear 107.

By driving of the drive devices 10 thus configured, it is possible to cause the nacelle 103 (the first structure) as one side of the movable section of the wind turbine 101 to rotate relative to the tower 102 (the second structure) as the other side of the movable section of the wind turbine 101. Particularly when the plurality of drive devices 10 included in the wind turbine drive system 5 mentioned above are operated in a synchronized manner, drive power of a sufficient magnitude is provided to properly turn the nacelle 103, having a large weight, relative to the tower 102.

More specifically, as shown in Fig. 9, each of the drive devices 10 is fixed to the nacelle 103 via a fastener 30 disposed so as to extend through a through hole 22a formed through a flange 22 of the drive device body 20. The fastener 30 includes a bolt 30a and a nut 30b. The strain sensor 40 is fixed to the nacelle 103 with a jig 49. The strain sensor 40 senses the strain of the bolt 30a, thereby sensing the load acting between the drive device 10, which includes the motor 23, the speed reducer 25, and the pinion gear 24a, and the ring gear 107. The strain sensor 40 is a specific example of application of the sensor 4 described for the first embodiment. The sensor 40 is preferably mounted to a location that receives or is likely to receive no other disturbance than the load acting between the pinion gear 24a and the ring gear 107. A specific and more preferable example of such a location is a case 21.

As shown in Fig. 8, the output shaft 24 of the drive device 10 is rotatably retained in the case 21. The motor 23 is fixed to the top portion of the case 21. The speed reducer 25 is housed in the case 21. The speed reducer 25 may be configured in any manner as long as it can decelerate the rotation of the motor 23 and output a motive power with an increased torque. For example, the speed reducer 25 may be formed of an eccentric oscillating gear reduction mechanism, a planetary gear reduction mechanism, or a reduction mechanism combining the eccentric oscillating gear-type and the planetary gear-type.

An end portion of the output shaft 24 distal from the speed reducer 25 extends out of the case 21, and the pinion gear 24a is formed at this extension portion of the output shaft 24. As shown in Figs. 6 and 9, the output shaft 24 penetrates a through-hole 103b formed through the bottom portion 103a of the nacelle 103, such that the pinion gear 24a can mesh with the ring gear 107. The pinion gear 24a has external teeth that mesh with the internal teeth of the ring gear 107. The drive device 10 has a longitudinal axis corresponding to a rotation axis Cr of the output shaft 24. In a state where the drive device 10 is fixed to the nacelle 103, the rotation axis Cr of the output shaft 24 is parallel to an axial direction dl of the wind turbine 101.

As shown in Figs. 8 and 9, the case 21 is formed in a tubular shape and disposed such that the longitudinal axis thereof is positioned on the rotation axis Cr. The case 21 is open at both ends thereof along the rotation axis Cr. The pinion gear 24a of the output shaft 24 is exposed from an opening of the case 21 on the tower 102 side. The motor 23 is mounted to an opening of the case 21 on the opposite side to the tower 102. Furthermore, the case 21 includes a flange 22. In the example shown in Fig. 7, the flange 22 is formed in an annular shape and extends along a circumference cl3 around the rotation axis Cr of the output shaft 24. As shown in Figs. 8 and 9, the through hole 22a is formed through the flange 22 so as to extend in the axial direction dl. A multitude of through holes 22a are formed on a circumference around the rotation axis Cr of the output shaft 24. In the example shown, twelve through holes 22a are formed. The fastener 30 extends through the through-holes 22a formed in the flange 22 of the drive device body 20 and thus penetrates the flange 22. In the example shown in Fig. 9, the bolt 30a penetrates the flange 22 of the drive device body 20 and the bottom portion 103a of the nacelle 103. The nut 30b is threadably engaged with the bolt 30a in a direction from the nacelle 103. The fastener 30 formed of a combination of the bolt 30a and the nut 30b is provided for each of the through holes 22a of the drive device body 20. In the example shown, each of the drive device bodies 20 is mounted to the nacelle 103 with twelve fasteners 30 at twelve locations.

The fastener 30 is not limited to the example shown. It is also possible that the nut 30b is replaced with a female screw formed in the through-hole of the nacelle 103, and the male screw of the bolt 30a is threadably engaged with the female screw. In this case, the fastener 30 is formed of the bolt 30a, and the male screw of the bolt 30a is threadably engaged with the female screw in the through-hole of the nacelle 103, thus making it possible to fix the drive device body 20 to the nacelle 103.

The strain sensor 40 is electrically connected to the control unit 220 (see Fig. 1) described for the first embodiment. The output of the strain sensor 40 indicating the sensing result of the strain of the bolt 30a is input to the control unit 220 in the form of an electric signal. The control unit 220 controls the braking of the rotation of the motor 23 by the electromagnetic brake 50 based on the output of the strain sensor 40.

For example, the electromagnetic brake 50 may be configured as shown in Fig. 10. In the example shown in Fig. 10, the electromagnetic brake 50 is mounted to the top end portion of a cover 72 of the motor drive unit 48 on the opposite side to the speed reducer 25. The electromagnetic brake 50 includes a housing 50a, a friction plate 56, an armature 57, an elastic member 55, an electromagnet 53, and a first friction plate connecting portion 77.

The housing 50a is a structure that houses the friction plate 56, the armature 57, the elastic member 55, the electromagnet 53, and the first friction plate connecting portion 77. The housing 50a is fixed to the cover 72 of the motor drive unit 48.

The friction plate 56 is connected to the drive shaft 48a of the motor drive unit 48 via the first friction plate connecting portion 77. The friction plate 56 has a through-hole that is penetrated by the top end portion of the drive shaft 48a.

The first friction plate connecting portion 77 includes a spline shaft 77a and a slide shaft 77b. The spline shaft 77a is fixed to an outer periphery of the top end portion of the drive shaft 48a through key-coupling with a key member (not shown) and engagement with a stopper ring 77c. The slide shaft 77b is mounted to the spline shaft 77a so as to be slidable in the axial direction. Furthermore, the first friction plate connecting portion 77 is provided with a spring mechanism (not shown) for situating the slide shaft 77b at a predetermined position in the axial direction relative to the spline shaft 77a. An inner periphery of the friction plate 56 is fixed to an edge portion of an outer periphery of a flange-shaped portion of the slide shaft 77b, so that the friction plate 56 is coupled integrally with the slide shaft 77b.

The electromagnetic brake 50 described above is configured such that, when the drive shaft 48a rotates, the spline shaft 77a, the slide shaft 77b, and the friction plate 56 also rotate together with the drive shaft 48a. In a state where the electromagnet 53 is excited, the slide shaft 77b and the friction plate 56 that are retained so as to be slidable in the axial direction relative to the drive shaft 48a and the spline shaft 77a are situated at a predetermined position in the axial direction of the spline shaft 77a by the spring mechanism. When disposed at this predetermined position, the friction plate 56 is separated from the armature 57 and a friction plate 58, which will be described later.

The armature 57 is installed so as to be contactable with the friction plate 56. When contacting with the friction plate 56, the armature 57 generates a braking force for braking the rotation of the drive shaft 48a.

The friction plate 58 is provided at a location on the top end portion of the cover 72 of the motor drive unit 48 which location facing the friction plate 56. The friction plate 58 is installed at such a position as to be contactable with the friction plate 56.

The elastic member 55 is retained in an electromagnet body 53a of the electromagnet 53 (described later). The elastic member 55 presses the armature 57 in a direction from the electromagnet 53 toward the friction plate 56. In the example shown in Fig. 10, the elastic member 55 in the electromagnet body 53a includes two arrays of elastic members 55 arranged in the circumferential direction on the inner peripheral side and the outer peripheral side so as to be concentric about the drive shaft 48a. The above-mentioned form of arrangement of the elastic members 55 is merely an example, and the elastic members 55 may be arranged in other forms.

The electromagnet 53 includes the electromagnet body 53a and the coil 51 and attracts the armature 57 by a magnetic force so as to separate the armature 57 from the friction plate 56.

The electromagnet body 53a is fixed to the housing 50a at the top end portion of the electromagnet body 53a on the opposite side to the side facing the armature 57. The electromagnet body 53a has a plurality of elastic member retaining holes 53c open toward the armature 57, and the elastic members 55 are disposed in the elastic member retaining holes 53c. The coil 51 is provided in the electromagnet body 53a.

When the electromagnetic brake 50 releases the braking of the rotation of the drive shaft 48a, electric power (i.e., an electric current) is supplied from the power supply to the coil 51 in response to the On signal from the control unit 220 so as to energize the electromagnet 53. When the electromagnet 53 is energized and thus is brought into an exited state, the armature 57 is attracted to the coil 51 by a magnetic force generated at the electromagnet 53. At this time, the armature 57 is attracted to the electromagnet 53 against an elastic force (spring force) of the elastic members 55. Thus, the armature 57 is separated from the friction plate 56, and the braking of the rotation of the drive shaft 48a is released. Accordingly, in the state where the electromagnet 53 is excited and the braking of the rotation of the drive shaft 48a is released, the armature 57 is brought into contact with the electromagnetic body 53a.

On the other hand, when the electromagnetic brake 50 brakes the rotation of the drive shaft 48a, the supply of electric power from the power supply to the coil 51 is stopped since the On signal is not output from the control unit 220. Since the supply of electric power is stopped, the electromagnet 53 is demagnetized. When the electromagnet 53 is demagnetized, the armature 57 is pressed toward the friction plate 56 by an elastic force of the elastic members 55, and thus the armature 57 contacts with the friction plate 56. Thus, a frictional force is generated between the armature 57 and the friction plate 56, and the rotation of the drive shaft 48a is braked. Fig. 10 shows a state in which the electromagnet 53 is demagnetized, and the rotation of the drive shaft 48a is braked.

In the state in which the electromagnet 53 is demagnetized and the drive shaft 48a is braked, the friction plate 56 is also contacted with the friction plate 58 by the elastic force acting from the armature 57. Accordingly, when the electromagnet 53 is demagnetized, the friction plate 56 is sandwiched between the armature 57 and the friction plate 58 by an elastic force from the elastic members 55. Thus, the rotation of the drive shaft 48a is braked very strongly by the frictional force generated between the armature 57 and the friction plate 56 and the frictional force generated between the friction plate 56 and the friction plate 58.

In the second embodiment, the electromagnetic brake 50 brakes the rotation of the drive shaft 48a disposed upstream of the speed reducer 25 and thus having a smaller torque than the output shaft 24. Therefore, the drive shaft 48a can be braked properly with a small braking force generated by the electromagnetic brake 50.

Aspects of the present invention are not limited to the foregoing individual embodiments and embrace various modifications conceivable by those skilled in the art. Advantageous effects of the present invention are also not limited to those described above. That is, various additions, changes, and partial deletions are possible in a range not departing from the invention as defined by the claims.

Some parts of the configuration of the embodiments and modifications described above can be combined together or replaced with others. Further, it is also possible to employ only a part of the configuration of the embodiments and modifications described above.

## Claims

1. A wind turbine brake control device (200) comprising:
an electromagnetic brake (50) for braking at least one of relative rotation between a pinion gear (24a) installed in a first structure (103) and a ring gear (107) installed in a second structure (102) or rotation of a motor (23) having the pinion gear (24a) mounted thereto, the first structure (103) and the second structure (102) constituting a movable section of a wind turbine (101); and
a contactless relay (210) disposed on a power supply line between a power supply for operation of the electromagnetic brake (50) and the electromagnetic brake (50) and configured to open and close the power supply line, wherein
the power supply is a three-phase power supply, and the contactless relay is a three-phase relay or a single-phase relay.

2. The wind turbine brake control device (200) of claim 1, wherein the contactless relay (210) is configured to open and close the power supply line at a response speed of 100 ms or less.

3. The wind turbine brake control device (200) of claim 1 or 2, wherein the first structure (103) is a nacelle.

4. The wind turbine brake control device (200) of any one of claims 1 to 3, further comprising:
a speed reducer (25) connected to a rotating shaft (48a) of the motor (23) and configured to decelerate the rotation of the motor (23) and output motive power with an increased torque to the pinion gear (24a),
wherein the electromagnetic brake (50) brakes rotation of the rotating shaft (48a) of the motor (23) to brake rotation of the pinion gear (24a).

5. The wind turbine brake control device (200) of claim 4, further comprising:
a sensor (40) for sensing a load acting between a drive device (20) and the ring gear (107), the drive device (20) including the motor (23), the speed reducer (25), and the pinion gear (24a); and
a control unit (220) configured to output to the contactless relay (210) a control signal for controlling opening and closing of the power supply line in accordance with the sensed load.

6. The wind turbine brake control device (200) of claim 5,
wherein the sensor (40) is a strain sensor configured to sense the load by sensing a strain of a bolt (30a) fixing the drive device (20) to the movable section, and
wherein when the sensed load exceeds a threshold value, the control unit (220) outputs a signal as the control signal for an instruction for opening or closing the power supply line.

7. The wind turbine brake control device (200) of any one of claims 1 to 6, wherein the contactless relay (210) includes a photocoupler.

8. The wind turbine brake control device (200) of any one of claims 1 to 7, wherein the contactless relay (210) includes a MOSFET.

9. The wind turbine brake control device (200) of any one of claims 1 to 8, further comprising a surge protection element disposed on the power supply line between the contactless relay (210) and the electromagnetic brake (50).

10. A wind turbine (101) comprising:
a wind turbine brake control device (200),
wherein the wind turbine brake control device (200) includes:
an electromagnetic brake (50) for braking at least one of relative rotation between a pinion gear (24a) installed in a first structure (103) and a ring gear (107) installed in a second structure (102) or rotation of a motor (23) having the pinion gear (24a) mounted thereto, the first structure (103) and the second structure (102) constituting a movable section of the wind turbine (101); and
a contactless relay (210) disposed on a power supply line between a power supply for operation of the electromagnetic brake (50) and the electromagnetic brake (50) and configured to open and close the power supply line, wherein
the power supply is a three-phase power supply, and the contactless relay is a three-phase relay or a single-phase relay.

## Patentansprüche

1. Windturbinenbremse-Steuervorrichtung (200), umfassend:
eine elektromagnetische Bremse (50) zum Bremsen von mindestens einer Relativdrehung zwischen einem in einer ersten Struktur (103) installierten Ritzel (24a) und einem in einer zweiten Struktur (102) installierten Hohlrad (107) oder Drehung eines Motors (23), an dem das Ritzel (24a) angebracht ist, wobei die erste Struktur (103) und die zweite Struktur (102) einen beweglichen Abschnitt einer Windturbine (101) bilden; und
ein kontaktloses Relais (210), das auf einer Stromversorgungsleitung zwischen einer Stromversorgung für den Betrieb der elektromagnetischen Bremse (50) und der elektromagnetischen Bremse (50) angeordnet ist und so konfiguriert ist, dass es die Stromversorgungsleitung öffnet und schließt, wobei
die Stromversorgung eine dreiphasige Stromversorgung ist und das kontaktlose Relais ein dreiphasiges Relais oder ein einphasiges Relais ist.

2. Windturbinenbremse-Steuervorrichtung (200) nach Anspruch 1, wobei das kontaktlose Relais (210) so konfiguriert ist, dass es die Stromversorgung mit einer Reaktionsgeschwindigkeit von 100 ms oder weniger öffnet und schließt.

3. Windturbinenbremse-Steuervorrichtung (200) nach Anspruch 1 oder 2, wobei die erste Struktur (103) ein Maschinenhaus ist.

4. Windturbinenbremse-Steuervorrichtung (200) nach einem der Ansprüche 1 bis 3, ferner umfassend:
einen Drehzahlminderer (25), der mit einer Drehwelle (48a) des Motors (23) verbunden ist und so konfiguriert ist, dass er die Rotation des Motors (23) verlangsamt und Antriebskraft mit einem erhöhten Drehmoment an das Ritzel (24a) abgibt,
wobei die elektromagnetische Bremse (50) die Drehung der Drehwelle (48a) des Motors (23) bremst, um die Drehung des Ritzels (24a) zu bremsen.

5. Windturbinenbremse-Steuervorrichtung (200) nach Anspruch 4, ferner umfassend:
einen Sensor (40) zum Erfassen einer zwischen einer Antriebsvorrichtung (20) und dem Hohlrad (107) wirkenden Last, wobei die Antriebsvorrichtung (20) den Motor (23), den Drehzahlminderer (25) und das Ritzel (24a) umfasst; und
eine Steuereinheit (220), die so konfiguriert ist, dass sie an das kontaktlose Relais (210) ein Steuersignal zum Steuern des Öffnens und Schließens der Stromversorgung gemäß der erfassten Last ausgibt.

6. Windturbinenbremse-Steuervorrichtung (200) nach Anspruch 5,
wobei der Sensor (40) ein Dehnungssensor ist, der so konfiguriert ist, dass er die Last durch Erfassen einer Dehnung einer Schraube (30a) erfasst, die die Antriebsvorrichtung (20) an dem beweglichen Abschnitt befestigt, und
wobei die Steuereinheit (220) ein Signal als Steuersignal für eine Anweisung zum Öffnen oder Schließen der Stromversorgung ausgibt, wenn die erfasste Last einen Schwellenwert überschreitet.

7. Windturbinenbremse-Steuervorrichtung (200) nach einem der Ansprüche 1 bis 6, wobei das kontaktlose Relais (210) einen Fotokoppler umfasst.

8. Windturbinenbremse-Steuervorrichtung (200) nach einem der Ansprüche 1 bis 7, wobei das kontaktlose Relais (210) einen MOSFET umfasst.

9. Windturbinenbremse-Steuervorrichtung (200) nach einem der Ansprüche 1 bis 8, ferner umfassend ein Überspannungsschutzelement, das in der Stromversorgung zwischen dem kontaktlosen Relais (210) und der elektromagnetischen Bremse (50) angeordnet ist.

10. Windturbine (101), umfassend:
eine Windturbinenbremse-Steuervorrichtung (200),
wobei die Windturbinenbremse-Steuervorrichtung (200) umfasst:
eine elektromagnetische Bremse (50) zum Bremsen von mindestens einer Relativdrehung zwischen einem in einer ersten Struktur (103) installierten Ritzel (24a) und einem in einer zweiten Struktur (102) installierten Hohlrad (107) oder Drehung eines Motors (23), an dem das Ritzel (24a) angebracht ist, wobei die erste Struktur (103) und die zweite Struktur (102) einen beweglichen Abschnitt einer Windturbine (101) bilden; und
ein kontaktloses Relais (210), das auf einer Stromversorgungsleitung zwischen einer Stromversorgung für den Betrieb der elektromagnetischen Bremse (50) und der elektromagnetischen Bremse (50) angeordnet ist und so konfiguriert ist, dass es die Stromversorgungsleitung öffnet und schließt, wobei
die Stromversorgung eine dreiphasige Stromversorgung ist und das kontaktlose Relais ein dreiphasiges Relais oder ein einphasiges Relais ist.

## Revendications

1. Dispositif de commande de freinage d'éolienne (200) comprenant :
un frein électromagnétique (50) pour freiner au moins une d'une rotation relative entre un pignon d'engrenage (24a) installé dans une première structure (103) et une couronne dentée (107) installée dans une deuxième structure (102) ou d'une rotation d'un moteur (23) doté du pignon d'engrenage (24a) monté sur celui-ci, la première structure (103) et la deuxième structure (102) constituant une section mobile d'une éolienne (101) ; et
un relai sans contact (210) disposé sur une ligne d'alimentation entre une alimentation pour un fonctionnement du frein électromagnétique (50) et le frein électromagnétique (50) et configuré pour ouvrir et fermer la ligne d'alimentation, dans lequel
l'alimentation est une alimentation triphasée, et le relai sans contact est un relai triphasé ou un relai monophasé.

2. Le dispositif de commande de frein d'éolienne (200) de la revendication 1, dans lequel le relai sans contact (210) est configuré pour ouvrir ou fermer la ligne d'alimentation à une vitesse de réaction de 100 ms ou moins.

3. Le dispositif de commande de frein d'éolienne (200) de la revendication 1 ou 2, dans lequel la première structure (103) est une nacelle.

4. Le dispositif de commande de frein d'éolienne (200) de l'une quelconque des revendications 1 à 3, comprenant en outre :
un réducteur de vitesse (25) connecté à un arbre rotatif (48a) du moteur (23) et configuré pour décélérer la rotation du moteur (23) et produire en sortie une puissance motrice avec un couple accru vers le pignon d'engrenage (24a),
dans lequel le frein électromagnétique (50) freine une rotation de l'arbre rotatif (48a) du moteur (23) pour freiner une rotation du pignon d'engrenage (24a).

5. Le dispositif de commande de frein d'éolienne (200) de la revendication 4, comprenant en outre :
un capteur (40) pour détecter une charge agissant entre un dispositif d'entraînement (20) et la couronne dentée (107), le dispositif d'entraînement (20) incluant le moteur (23), le réducteur de vitesse (25) et le pignon d'engrenage (24a) ; et
une unité de commande (220) configurée pour produire en sortie vers le relai sans contact (210) un signal de commande pour commander une ouverture et une fermeture de la ligne d'alimentation conformément à la charge détectée.

6. Le dispositif de commande de frein d'éolienne (200) de la revendication 5,
dans lequel le capteur (40) est un capteur de contrainte configuré pour détecter la charge en détectant une contrainte sur un boulon (30a) fixant le dispositif d'entraînement (20) à la section mobile, et
dans lequel lorsque la charge détectée dépasse une valeur de seuil, l'unité de commande (220) produit en sortie un signal en tant que le signal de commande pour une instruction pour ouvrir ou fermer la ligne d'alimentation.

7. Le dispositif de commande de frein d'éolienne (200) de l'une quelconque des revendications 1 à 6, dans lequel le relai sans contact (210) inclut un photocoupleur.

8. Le dispositif de commande de frein d'éolienne (200) de l'une quelconque des revendications 1 à 7, dans lequel le relai sans contact (210) inclut un MOSFET.

9. Le dispositif de commande de frein d'éolienne (200) de l'une quelconque des revendications 1 à 8, comprenant en outre un élément de protection contre les surtensions disposé sur la ligne d'alimentation entre le relai sans contact (210) et le frein électromagnétique (50).

10. Éolienne (101) comprenant :
un dispositif de commande de freinage d'éolienne (200),
dans lequel le dispositif de commande de freinage d'éolienne (200) inclut :
un frein électromagnétique (50) pour freiner au moins une d'une rotation relative entre un pignon d'engrenage (24a) installé dans une première structure (103) et une couronne dentée (107) installée dans une deuxième structure (102) ou d'une rotation d'un moteur (23) doté du pignon d'engrenage (24a) monté sur celui-ci, la première structure (103) et la deuxième structure (102) constituant une section mobile de l'éolienne (101) ; et
un relai sans contact (210) disposé sur une ligne d'alimentation entre une alimentation pour un fonctionnement du frein électromagnétique (50) et le frein électromagnétique (50) et configuré pour ouvrir et fermer la ligne d'alimentation, dans lequel
l'alimentation est une alimentation triphasée, et le relai sans contact est un relai triphasé ou un relai monophasé.
